# EUROPÄISCHE PATENTSCHRIFT

(11) **EP 2 767 742 B1**
(45) Veröffentlichungstag und Bekanntmachung des Hinweises auf die Patenterteilung: **03.04.2019**
(21) Anmeldenummer: 14155306.5
(22) Anmeldetag: 17.02.2014
(51) Int. Cl.: F16H 63/30

(54) **Verfahren zur Herstellung einer Schaltungskomponente sowie Verwendung eines Gleitsteins**
Method for producing a shift component, as well as the use of a slide block
Procédé de fabrication d'un composant de changement de vitesse et aussi l'utilisation d'un coulisseau

(30) Priorität: 18.02.2013 DE 102013101582; 12.09.2013 DE 102013110061; 14.02.2014 DE 102014101919
(43) Veröffentlichungstag der Anmeldung: 20.08.2014
(73) Patentinhaber: Kokinetics GmbH, 65830 Kriftel (DE)
(72) Erfinder: Dietz, Horst, 67727 Lohnsfeld (DE)
(74) Vertreter: Patentanwälte und Rechtsanwalt Weiß, Arat & Partner mbB

(56) Entgegenhaltungen:
- EP-A2- 1 347 216
- DE-A1- 10 260 560
- DE-A1- 19 919 271
- DE-A1-102004 032 293
- DE-A1-102008 022 239
- DE-A1-102011 052 838
- JP-A- H10 252 887

## Beschreibung

Die Erfindung betrifft ein Verfahren nach dem Oberbegriff nach Anspruch 1 und 2 or 3 or 4 oder eine Verwendung nach Anspruch 12.

### Stand der Technik

Aus dem Stand der Technik sind verschiedene Schaltungskomponenten sowie deren Herstellungsverfahren bekannt und gebräuchlich.

Nachteilig an diesen Schaltungskomponenten ist der Umstand, dass es aufgrund der verschiedenen Herstellungverfahren der Einzelteile der Schaltungskomponente bei einem Zusammenbau zu Toleranzabweichungen kommt, welche wiederum allgemein die Brauchbarkeit der Schaltungskomponente beeinträchtigen.

In diesem Zusammenhang wird auf die DE 10 2008 022239 A1 hingewiesen. Dort dort ist ebenfalls ein Herstellungsverfahren für eine Schaltungskomponente offenbart. Insbesondere finden sich dort Hinweise auf den Einsatz von Gleitsteinen.

Weiter wird auf die JP H10 252887 A, die DE 10 2011 052838 A1 und die DE 199 19 271 A1 sowie die DE 10 2004 032293 A1 hingewiesen, welche ein Verfahren zur Herstellung einer Kraftfahrzeugschaltung nach dem Stand der Technik offenbaren. Gleiches gilt für die DE 102 60 560 A1 und die EP 1 347 216 A2. DE102008022239 A1 wird als nächsten Stand der Technik angesehen.

### Aufgabe der Erfindung

Aufgabe der Erfindung ist es, ein Herstellungsverfahren zur Verfügung zu stellen, welches auf einfache und kostengünstige Weise ermöglicht, die entstehenden Toleranzabweichungen auszugleichen und die Ausfallquote der Schaltungskomponenten zu verringern.

### Lösung der Aufgabe

Zur Lösung der Aufgabe führen die Merkmale nach den Ansprüchen 1 und 2.

Eine erfindungsgemäss hergestellte Schaltungskomponente dient zum Einbau in ein Fahrzeuggetriebe. Als Fahrzeuge kommen hierbei Kraftfahrzeuge, Luftfahrzeuge, Schifffahrzeuge und Lastkraftwagen in Betracht. Dabei wird die Schaltkomponente durch einen Schaltknüppel oder elektromechanisch oder hydraulisch betätigt betätigt. Die Begriffe der Schaltungskomponente und der Schaltgabel könen als synonym im Rahmen der Erfindung gelesen werden.

Die Schaltungskomponente weist hierbei eine Schaltkulisse, eine Schaltschräge oder eine Schaltfläche auf. Die Schaltschrägen oder Schlatflächen können ggf über Rollenabnehmer die Schaltgabel betätigen. Daneben sind auch einzelne Schaltkulissenkomponenten vorhanden sein, welche mit einem oder mehreren Schaltarmen teilschwenkbar oder linear verschiebbar verbunden sind. Im erfindungsgemässen Herstellungsverfahren kann die Schaltkulisse hierzu ein gebogenes Langloch aufweisen, in welches eine Ausformung des Schaltarmes eingreift. Dabei vollzieht der Schaltarm die vom gebogenen Langloch vorgegebene Teilschwenkbewegung nach. Die Schaltkulisse weist weiterhin eine Schaltfingerausnehmung auf, welche für die Schaltvorgänge der Schaltungskomponente notwendig ist. Daneben wird in den Schaltarm eine Bohrung zur Aufnahme eines Gleitsteins eingebracht. Der Gleitstein unterstützt dabei ebenfalls die Schaltvorgänge der Schaltungskomponente.

Durch lineares Verschieben der Schaltwelle über die Schaltschrägen der Schaltkulisse oder der Schaltkulissenkomponente über die Rollenabnehmer und einem Hebelmechanismus wird die Schaltgabel linear verschoben.

Als Schaltkulisse gilt im Rahmen dieser Erfindung die Gesamtheit der einzelnen Schaltkulissenkomponenten. Durch das Justieren jeder einzelnen Schaltkulissenkomponente für sich wird vorteilhaft erreicht, dass ein noch genaueres Bild der Toleranzabweichungen bestimmt werden kann.

Weiterhin kann in den Schaltarm eine Fixierungsöffnung eingebracht werden, welche zur teilschwenkbaren Fixierung des Schaltarms an einem Gehäuse dient. Hierzu kann in die Fixierungsöffnung ein Kugellager eingesetzt werden.

In einem anderen Ausführungsbeispiel kann auf den Schaltarm verzichtet werden. Folglich bedarf es dann auch keiner Fixierungsöffnung.

In einem erfindungsgemässen Verfahren wird die Schaltkulisse und/oder jede einzelne Schaltkulissenkomponente mit einem Schaltarm teilschwenkbar verbunden. Dazu wird ein Führungsbolzen des Schaltarms in das gebogene Langloch der Schaltkulisse und/oder jede einzelne Schaltkulissenkomponente eingebracht.

Die Schaltungskomponente weist hierbei eine Schaltkulisse, eine Schaltschräge oder eine Schaltfläche auf. Die Schaltschrägen oder Schlatflächen können ggf über Rollenabnehmer die Schaltgabel betätigen. Daneben sind auch einzelne Schaltkulissenkomponenten vorhanden sein, welche mit einem oder mehreren Schaltarmen teilschwenkbar oder linear verschiebbar verbunden sind. Gerade bei der linear verschiebbaren Schaltkulisse oder Schaltkulissenkomponente kommt eine linear verschiebbare und/oder axial drehbare Schaltwelle zum Einsatz.

Weiterhin wird in die Schaltkulisse und/oder jede einzelne Schaltkulissenkomponente eine Schaltfingerausnehmung eingeformt. Das Einformen der Schaltfingerausnehmung kann hierbei durch bekannte Herstellungsverfahren, wie beispielsweise das Stanzen oder das Feinschneiden erfolgen. Daneben kann in den Schaltarm mindestens eine Fixierungsöffnung eingebracht werden. Das Einbringen der Fixierungsöffnung kann ebenfalls durch bekannte Herstellungsverfahren, wie Bohren oder Feinschneiden oder dergleichen erfolgen. Der Fixierungsöffnung bedarf es nicht, wenn die Gesamtanordnung keine schwenkbar angeordneten beweglichen Teile um fasst, wie dies beispielsweise bei den Schaltarmen der einen Asuführung der Fall ist.

Im erfindungsgemässen Herstellungsverfahren wird zunächst die Schaltkulisse und/oder jede einzelne Schaltkulissenkomponente mittels Einbringung einer ersten Justierungseinrichtung in die Schaltfingerausnehmung in einer ersten Position justiert. In dem anderen Ausführungsbeispiel werden die Schaltflächen oder Schaltschrägen in der ersten Position justiert. Die erste Position ist eine vom Nutzer vorgegebene Sollstelle. Dazu kann beispielsweise ein Stabelement in die Schaltfingerausnehmung derart eingebracht werden, alsdass eine formschlüssige Verbindung zwischen dem Stabelement und der Schaltfingerausnehmung entsteht. Die Schaltkulisse und/oder jede einzelne Schaltkulissenkomponente weist/weisen in ihrer Schaltfingerausnehmung eine auf das Stabelement abgestimmte Ausbuchtung auf, in welche das Stabelement dann einfahren kann und dabei die Schaltkulissen in der ersten Position justiert. Falls aufgrund anderer Bauarten von Getrieben kann eine Schaltfingerausnehmung entfallen, da die Ansteuerung durch Schaltflächen und/oder Schaltschrägen umgesetz bzw erreicht wird. Die axial drehbare und linear verschiebbare Schaltwelle dient der Justierung.

In einem weiteren Schritt des erfindungsgemässen Herstellungsverfahrens wird die Fixierungsöffnung mittels einer zweiten Justierungseinrichtung in einer zweiten Position justiert. Bei der zweiten Justiereinrichtung handelt es sich um eine hydraulische oder pneumatische Festlegeeinrichtung, wobei die Fixierungsöffnung beispielsweise teilweise durch die Justiereinrichtung angegriffen und in der zweiten Position festgehalten wird. Die zweite Position wird zur Berechnung von Toleranzen in Abhängigkeit zur ersten Position benötigt. Die Erfassung der zweiten Position kann in einem anderen Ausführungsbeispiel auch derart erfolgen, alsdass die linear und axial bewegliche Schaltwelle als zweite Jusiterungseinrichtung genutzt wird.

Weiterhin wird die Schaltgabel vermessen, wobei Toleranzabweichungen erfasst werden. Das Vermessen der Toleranzabweichungen der Schaltgabel kann hierbei manuell, hydraulisch, pneumatisch oder hydropneumatisch erfolgen durch eine Person oder elektrisch bzw. elektronisch durch einen Sensor erfolgen. Dabei werden die Toleranzabweichungen beispielsweise in einem Rechner verarbeitet. Das Verarbeiten beinhaltet die Schritte, dass Soll-Daten mit Ist-Daten verglichen werden und anschliessend ermittelt wird, wie gross die Abweichung tatsächlich ist.

Dabei wird zur Berücksichtigung der Toleranzabweichungen ermittelt, wie die Soll-Daten bei einer perfekten Schaltgabel sind und wie sich die Ist-Daten von diesen Soll-Daten unterscheiden.

Unter Berücksichtigung der erfassten Toleranzabweichungen wird an dem Schaltarm zumindest eine Bohrung zur Aufnahme eines Gleitsteines eingebracht. Die Position der Bohrung wird dabei in Abhängigkeit der Toleranzabweichungen in den Schaltarm derart eingebracht, als dass die Bohrung an der von den Soll-Daten vorgegebenen Stelle am Schaltarm entsteht. Die Gleitsteine sind dabei immer gleich ausgeführt und erfüllen ihre Aufgabe nun an der von den Soll-Daten vorgegebenen Stelle.

Bei einem weiteren erfindungsgemässen Herstellungsverfahren werden die erfassten Toleranzabweichungen derart ausgeglichen, dass in eine immer an der Ist-Stelle vorhandenen Bohrung verschiedene Arten von Gleitsteinen eingesetzt werden, welche dann einen Toleranzausgleich der Funktion der Gleitsteine zu den Soll-Daten hin ermöglichen.

Der Gleitstein zum Einsetzen in den Schaltarm der Schaltgabel weist einen Bolzen und einen Anschlagbereich. Der Bolzen ist dabei exzentrisch auf dem Anschlagbereich angeordnet und wird in eine Bohrung des Schaltarmes eingebracht. Bevorzugt ist der Bolzen in der Bohrung des Schaltarmes festlegbar. Als exzentrische Anordnung ist hierbei zu verstehen, dass der Bolzen zwar auch zentrisch, aber erfindungsgemäss insbesondere dezentrisch an unterschiedlichen Positionen auf dem Anschlagbereich angeordnet sein kann. Daneben wird der Gleitstein durch eine axiale Sicherung vor dem Herausfallen bzw dem Verlorengehen beim Transport gesichert.

Im Falle der bereits an der Ist-Stelle vorhandenen Bohrung erfolgt der Toleranzausgleich mit exzentrisch ausgebildeten unterschiedlichen Gleitsteinen. Im Falle der an der Soll-Stelle vorhandenen Bohrung erfolgt der Toleranzausgleich mit immer den gleichen Gleitsteinen, egal ob, der Bolzen exzentrisch oder zentrisch auf dem Anschlagbereich angeordnet ist. Dabei sind die Gleitsteine derart ausgebildet, alsdass nur die zugeordneten Gleitsteine in die jeweilige Bohrung eingesetzt werden können. Folglich sind Bohrung und dazugehöriger Gleitstein durch den Rechner ermittelt. Die Zuordnung des Gleitsteins erfolgt beispielweise durch das Ergebnis des Rechners bei der Ermittlung der Toleranzabweichung.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichungen; diese zeigt in
Figur 1 eine Seitenansicht einer Schaltungskomponente hergestellt nach dem erfindungsgemässen Verfahren;
Figur 2 eine weitere Seitenansicht der Schaltungskomponente nach Figur 1 um 90° gedreht; und
Figur 3 verschiedene Ansichten eines Gleitsteines
Figur 4 eine schematische Seitenansicht eines weiteren Ausührungsbeispiels.

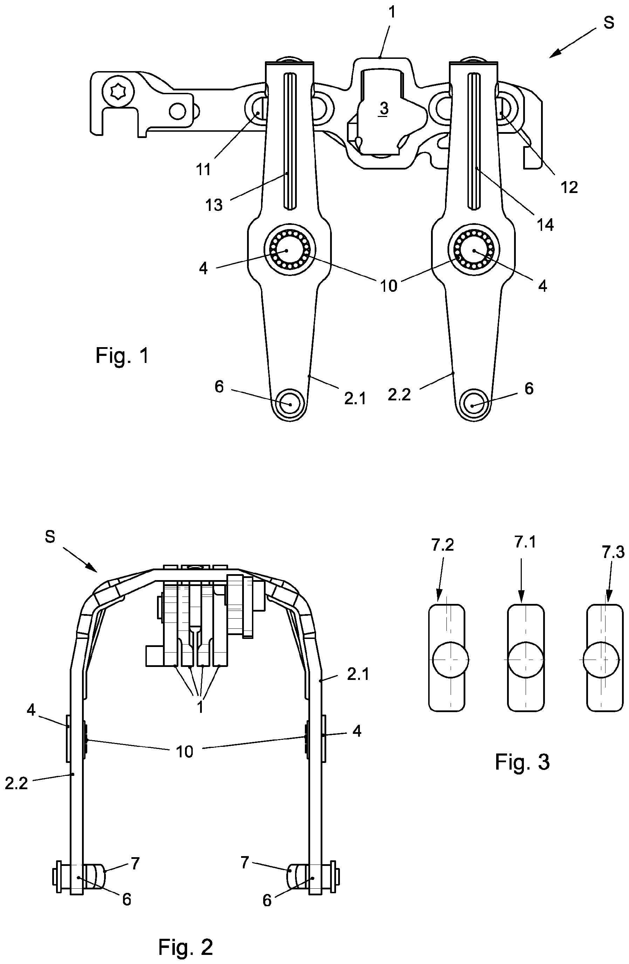

Figur 1 zeigt eine Schaltungskomponente S. Die Schaltungskomponente S weist einen Schaltarm 2.1 und einen Schaltarm 2.2 auf. Die Schaltarme 2.1 und 2.2 sind teilschwenkbar mit einer Schaltkulisse 1 verbunden. In diesem Ausführungsbeispiel besteht die Schaltkulisse 1 aus vier einzelnen Schaltkulissenkomponenten 1.1, 1.2, 13, 1.4. Dazu werden nicht näher dargestellte Bolzen der Schaltarme 2.1 und 2.2 in leicht gebogenen Langlöchern 11 und 12 geführt. Ausserdem weist die Schaltkulisse 1 eine Schaltfingerausnehmung 3 auf. Die Schaltarme 2.1 und 2.2 weisen je eine Verstärkungsrippe 13 und 14 auf.

Weiterhin ist in etwa mittig auf den Schaltarmen 2.1 und 2.2 eine Fixierungsöffnung 4 zu erkennen, wobei in die Fixierungsöffnung 4 jeweils ein Kugellager 10 eingefügt ist.

Andernends der Verstärkungsrippe 13 und 14 zu der Fixierungsöffnung 4 ist eine Bohrung 6 endseitig an dem Schaltarm 2.1 und 2.2 eingebracht. Diese Bohrung 6 dient der späteren Aufnahme eines in Figur 2 und 3 gezeigten Gleitsteines 7.

In Figur 2 ist dann der in die Bohrung 6 eingebrachte Gleitstein 7 gezeigt. Daneben wird auf die Wiederholung der bereits zu Figur 1 beschriebenen Merkmale verzichtet. Es wird jedoch darauf hingewiesen, dass aus der Figur 2 hervorgeht, dass auch eine Vielzahl von Schaltkulissen 1 möglich sind.

Figur 3 zeigt unterschiedliche Ausgestaltungen von Gleitsteinen 7. Die Gleitsteine 7 weisen jeweils einen Bolzen und einen Anschlagbereich. Der Gleitstein 7.1 zeigt eine reguläre Anordnung von Bolzen und Anschlagbereich. Der Bolzen befindet sich dabei in einer mittigen Position. Dabei ist die mittige Position des Bolzens mit der mittigen Positon des Anschlagbereichs im Wesentlichen kongruent. Die mittige Positon des Anschlagbereichs wird strichliniert dargestellt.

Die Gleitsteine 7.2 und 7.3 zeigen eine exzentrische Anordnung des Bolzens auf dem Anschlagbereich. Die exzentrische Anordnung des Bolzens wird durch eine Verschiebung des Bolzens ausserhalb der mittigen Position des Anschlagbereichs erwirkt.

Das Herstellungsverfahren ist wie folgt:
Die Schaltungskomponente wird in erster Linie durch die Verbindung von zwei U-förmigen Schaltarmen 2.1 und 2.2 mit zumindest einer Schaltkulisse 1 erreicht. Die Schaltarme 2.1 und 2.2 und die Schaltkulisse 1 werdem hierbei nach Herstellungsverfahren aus dem Stand der Technik, wie Giessen, Spritzen, Stanzen oder Sintern oder dergleichen hergestellt. Ein bevorzugtes Material ist hierbei Messing oder Bundmetalle bzw Legierungen.

Zunächst wird dann mittels Einbringung einer ersten Justierungseinrichtung, beispielsweise in Form eines Stabelementes, in die Schaltfingerausnehmung 3 die Schaltkulisse 1 in einer ersten Position justiert. Anschliessend wird die Fixierungsöffnung 4 wird mittels einer zweiten Justierungseinrichtung in einer zweiten Position justiert. Die Schaltungskomponente S wird vermessen, wobei Toleranzabweichungen erfasst werden. Unter Berücksichtigung der erfassten Toleranzabweichungen wird an den Schaltarmen 2.1 und 2.2 zumindest eine Bohrung 6 zur Aufnahme des Gleitsteines 7 eingebracht. Die Position der Bohrung 6 wird durch Abgleich der Soll-Daten mit den Ist-Daten ermittelt und in den jeweiligen Schaltarm 2.1 und 2.2 eingebracht. Dabei wird zunächst in die Schaltgabel eine erste kleinere Bohrung eingebracht zwecks Bestimmung der Toleranzabweichung. In einerm zweiten Schritt wird dann die endgültige Bohrung 6 eingebracht, wobei die Toleranzabweichungen eliminiert werden.

In einem zweiten Ausführungsbeispiel ist die Position der Bohrung 6 bereits vorbestimmt und zwar anhand der Ist-Daten und unter Berücksichtigung der erfassten Toleranzabweichungen wird in die Bohrung 6 aus einer Auswahl von Gleitsteinen 7 ein Gleitstein eingesetzt, welcher die erfassten Toleranzabweichungen im Wesentlichen ausgleicht.

Die Erfassung und die Berücksichtung der Toleranzabweichungen erfolgt durch einen nicht näher gezeigten Rechner.

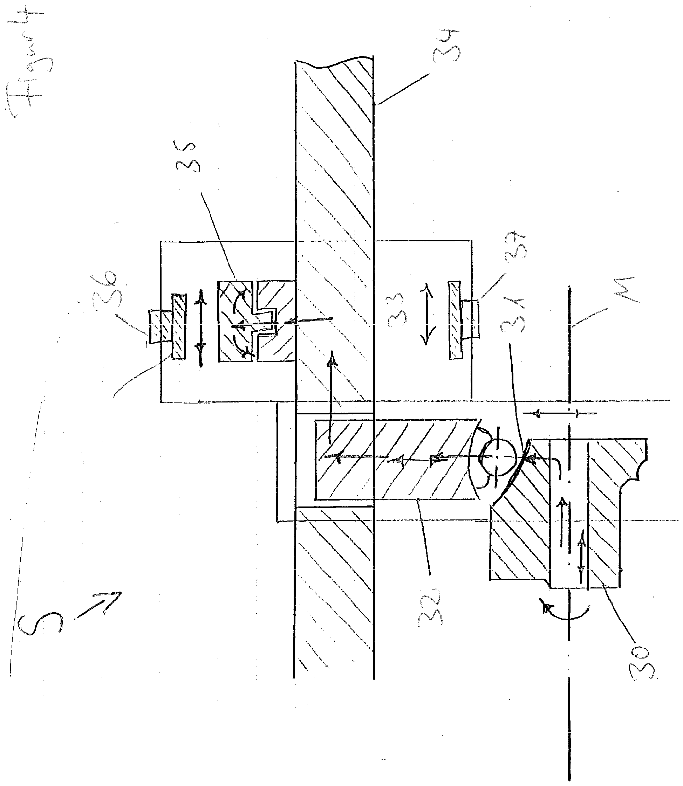

Figur 4 zeigt Schaltkomponente S. Dort ist eine Schaltwelle 30 gezeigt.Diese Schaltwelle 30 weist eine Schaltfläche in Form einer Schaltschräge 31 auf. Die Schatwelle 30 ist rotativ und verschiebbar zu einer Mittelachse gelagert. Rotativ bedeutet in diesem Zusammenhang, dass die Schaltwelle 30 um ihre eigene Mitellinie gedreht werden kann. Verschiebbar bedeutet, dass die Schaltwelle 30 30 in der Mitellinie und deren Verlängerung verschoben werden kann. Weiter ist ein Rollenabnehmer 32 gezeigt, welcher eine Schaltgabel 33 betätigen kann. Je nachdem in welcher Position die Schaltwelle 30 befindlich ist, wird der Rollabnehmer 32 betätigt, welcher wiederum einen Schieberahmen 34 betätigt, welcher wiederum mit der Schaltgabel 33 in Wirkverbindung steht. Durch die Schaltgabel 33 wiederum wird ein Schaltelement 35 hin zu einem ersten Gleitstein 36 oder zu einem zweiten Gleitstein 37 gedreht, hinbewegt und tritt jeweils entweder mit dem ersten Gleitstein 36 oder dem zweiten Gleitstein 37 in Wirkverbindung.

### Positionszahlenliste

- S: Schaltunskomponente
- 1.: Schaltkulisse
- 2.: Schaltarm
- 3.: Schaltfingerausnehmung
- 4.: Fixieröffnung
- 5.:
- 6.: Bohrung
- 7.: Gleistein
- 8.:
- 9.:
- 10.: Kugellager
- 11.: Langloch
- 12.: Langloch
- 13.: Verstärkungsrippe
- 14.: Verstärkungsrippe

- 30.: Schaltwelle
- 31.: Schaltschräge
- 32.: Rollabnehmer
- 33.: Schaltgabel
- 34.: Schieberahmen
- 35.: Schaltelement
- 36.: erster Gleitstein
- 37.: zweiter Gleitstein

## Patentansprüche

1. Verfahren zur Herstellung einer Schaltungskomponente (S) eines Fahrzeuggetriebes mit zumindest einer Schaltkulisse (1) und/oder einzelne Schaltkulissenkomponenten, mit welcher/welchen zumindest ein Schaltarm (2.1, 2.2) teilschwenkbar verbunden wird, wobei in die Schaltkulisse (1) und/oder jede einzelne Schaltkulissenkomponente eine Schaltfingerausnehmung (3) eingeformt wird und in den Schaltarm (2.1, 2.2) mindestens eine Fixierungsöffnung (4) eingebracht wird,
**gekennzeichnet durch** folgende Schritte:
- die Schaltkulisse (1) und/oder jede einzelne Schaltkulissenkomponente wird mittels Einbringung einer ersten Justierungseinrichtung in die Schaltfingerausnehmung (3) der Schaltkulisse (1) und/oder jeder einzelnen Schaltkulissenkomponente in einer ersten Position justiert;
- die Fixierungsöffnung (4) wird mittels einer zweiten Justierungseinrichtung in einer zweiten Position justiert;
- die Schaltungskomponente (S) wird vermessen, wobei Toleranzabweichungen erfasst werden;
- unter Berücksichtigung der erfassten Toleranzabweichungen wird an dem Schaltarm (2.1, 2.2) zumindest eine Bohrung (6) zur Aufnahme eines Gleitsteines (7) eingebracht.

2. Verfahren zur Herstellung einer Schaltungskomponente (S) eines Fahrzeuggetriebes mit zumindest einer Schaltkulisse (1) und/oder einzelne Schaltkulissenkomponenten, mit welcher/welchen zumindest ein Schaltarm (2.1, 2.2) teilschwenkbar verbunden wird, wobei in die Schaltkulisse (1) und/oder jede einzelne Schaltkulissenkomponente eine Schaltfingerausnehmung (3) eingeformt wird und in den Schaltarm (2.1, 2.2) mindestens eine Fixierungsöffnung (4) eingebracht wird, wobei in den Schaltarm (2.1, 2.2) eine Bohrung (6) zur Aufnahme von einem Gleitstein (7) eingebracht wird,
**gekennzeichnet durch** folgende Schritte:
- die Schaltkulisse (1) und/oder jede einzelne Schaltkulissenkomponente wird mittels Einbringung einer ersten Justierungseinrichtung in die Schaltfingerausnehmung (3) und/oder jede einzelne Schaltkulissenkomponente in einer ersten Position justiert;
- die Fixierungsöffnung (4) wird mittels einer zweiten Justierungseinrichtung in einer zweiten Position justiert;
- die Schaltungskomponente (S) wird vermessen, wobei Toleranzabweichungen erfasst werden;
- unter Berücksichtigung der erfassten Toleranzabweichungen wird in die Bohrung (6) aus einer Auswahl von Gleitsteinen (7) ein Gleitstein eingesetzt, welcher die erfassten Toleranzabweichungen im Wesentlichen ausgleicht.

3. Verfahren zur Herstellung einer Schaltungskomponente (S) eines Fahrzeuggetriebes mit zumindest einer Schaltkulisse (1), wobei die Schaltkulisse (1) eine Schaltschräge oder eine Schaltfläche aufweist wobei die Schaltkulisse (1) auf der Schaltwelle angeordnet wird, wobei die Schaltwelle axial drehbar und linear beweglich angeorndet wird **gekennzeichnet durch** folgende Schritte:
- die Schaltkulisse (1) und/oder jede einzelne Schaltkulissenkomponente wird durch Betätigen der Schaltwelle in einer ersten Position justiert;
- die Schaltungskomponente (S) wird vermessen, wobei Toleranzabweichungen erfasst werden;
- unter Berücksichtigung der erfassten Toleranzabweichungen wird an dem Schaltarm (2.1, 2.2) zumindest eine Bohrung (6) zur Aufnahme eines Gleitsteines (7) eingebracht.

4. Verfahren zur Herstellung einer Schaltungskomponente (S) eines Fahrzeuggetriebes mit zumindest einer Schaltkulisse (1), wobei die Schaltkulisse (1) eine Schaltschräge oder eine Schaltfläche aufweist wobei die Schaltkulisse (1) auf der Schaltwelle angeordnet wird, wobei die Schaltwelle axial drehbar und linear beweglich angeordnet wird, und wobei an einem Schaltarm (2.1,2.2) zumindest eine Bohrung (6) zur Aufnahme von einem Gleitstein (7) eingebracht wird, **gekennzeichnet durch** folgende Schritte:
- die Schaltkulisse (1) und/oder jede einzelne Schaltkulissenkomponente wird durch Betätigen der Schaltwelle in einer ersten Position justiert;
- die Schaltungskomponente (S) wird vermessen, wobei Toleranzabweichungen erfasst werden;
- unter Berücksichtigung der erfassten Toleranzabweichungen wird in die Bohrung (6) aus einer Auswahl von Gleitsteinen (7) ein Gleitstein eingesetzt, welcher die erfassten Toleranzabweichungen im Wesentlichen ausgleicht.

5. Verfahren nach einem der vorigen Ansprüche, **dadurch gekennzeichnet, dass** die Toleranzabweichungen durch einen Vergleich von Soll-Daten mit Ist-Daten der Schaltungskomponente bzw der Schaltgabel (S) ermittelt werden.

6. Verfahren nach Anspruch 1 oder 3, **dadurch gekennzeichnet, dass** die Bohrung an der von den Soll-Daten vorgegebenen Stelle des Schaltarmes (2.1, 2.2) zum Ausgleich der Toleranzabweichungen eingebracht wird.

7. Verfahren nach einem der Ansprüche 1, 2, 5, 6, **dadurch gekennzeichnet, dass** ein Stabelement (4) als erste Justiereinrichtung verwendet wird.

8. Verfahren nach einem der Ansprüche 3 bis 6, **dadurch gekennzeichnet, dass** die Schaltwelle als erste Justiereinrichtung verwendet wird.

9. Verfahren nach einem der vorigen Ansprüche, **dadurch gekennzeichnet, dass** die Erfassung und die Berücksichtung der Toleranzabweichungen durch einen Rechner erfolgt.

10. Verfahren nach einem der Ansprüche 1, 2, 5 bis 9, **dadurch gekennzeichnet, dass** in die Fixieröffnung (4) ein Kugellager (10) eingesetzt wird.

11. Verfahren nach einem der vorigen Ansprüche, **dadurch gekennzeichnet, dass** die Schaltkulisse (1) durch einen Schaltknüppel oder elektromechanisch oder hydrostatisch betätigt wird.

12. Verwendung eines Gleitsteines in einem Verfahren nach den Ansprüche 1 bis 11.

## Claims

1. A method for producing a gear change component (S) of a vehicle gearbox having at least one selector gate (1) and/or individual selector gate components
to which
at least one selector arm (2.1, 2.2) is partially-pivotably connected, wherein a selector finger slot (3) is integrally formed in the selector gate (1) and/or each individual selector gate component and at least one fixing opening (4) is incorporated in the selector arm (2.1, 2.2), **characterised by** the following steps:
- the selector gate (1) and/or each individual selector gate component is aligned in a first position by introducing a first aligning device into the selector finger slot (3) of the selector gate (1) and/or each individual selector gate component;
- the fixing opening (4) is aligned in a second position by a second aligning device;
- the gear change component (S) is calibrated, wherein tolerance deviations are recorded;
- taking into account the recorded tolerance deviations, at least one bore (6) for receiving a slide block (7) is incorporated in the selector arm (2.1, 2.2).

2. A method for producing a gear change component (S) of a vehicle gearbox having at least one selector gate (1) and/or individual selector gate components,
to which
at least one selector arm (2.1, 2.2) is partially-pivotably connected, wherein a selector finger slot (3) is integrally formed in the selector gate (1) and/or each individual selector gate component and at least one fixing opening (4) is incorporated in the selector arm (2.1, 2.2), wherein a bore (6) for receiving a slide block (7) is incorporated in the selector arm (2.1, 2.2),
**characterised by** the following steps:
- the selector gate (1) and/or each individual selector gate component is aligned in a first position by introducing a first aligning device into the selector finger slot (3) and/or each individual selector gate component;
- the fixing opening (4) is aligned in a second position by a second aligning device;
- the gear change component (S) is calibrated, wherein tolerance deviations are recorded;
- taking into account the recorded tolerance deviations, a slide block from a selection of slide blocks (7) is inserted into the bore (6), which slide block substantially compensates the recorded tolerance deviations.

3. A method for producing a gear change component (S) of a vehicle gearbox having at least one selector gate (1), wherein the selector gate (1) has a selector ramp or a selector area, wherein the selector gate (1) is arranged on the selector shaft, wherein the selector shaft is arranged to be axially rotatable and linearly movable, **characterised by** the following steps:
- the selector gate (1) and/or each individual selector gate component is aligned in a first position by actuating the selector shaft;
- the gear change component (S) is calibrated, wherein tolerance deviations are recorded;
- taking into account the recorded tolerance deviations, at least one bore (6) for receiving a slide block (7) is incorporated in the selector arm (2.1, 2.2).

4. A method for producing a gear change component (S) of a vehicle gearbox having at least one selector gate (1), wherein the selector gate (1) has a selector ramp or a selector area, wherein the selector gate (1) is arranged on the selector shaft, wherein the selector shaft is arranged to be axially rotatable and linearly movable and wherein at least one bore (6) for receiving a slide block (7) is incorporated in a selector arm (2.1, 2.2),
**characterised by** the following steps:
- the selector gate (1) and/or each individual selector gate component is aligned in a first position by actuating the selector shaft;
- the gear change component (S) is calibrated, wherein tolerance deviations are recorded;
- taking into account the recorded tolerance deviations, a slide block from a selection of slide blocks (7) is inserted into the bore (6), which slide block substantially compensates the recorded tolerance deviations.

5. The method according to one of the preceding claims, **characterised in that** the tolerance deviations are determined by comparing target data with actual data of the gear change component or the selector fork (S).

6. The method according to Claim 1 or 3, **characterised in that** the bore is incorporated in the point of the selector arm (2.1, 2.2) which is specified by the target data for compensating the tolerance deviations.

7. The method according to one of Claims 1, 2, 5, 6, **characterised in that** a rod element (4) is used as the first aligning device.

8. The method according to one of Claims 3 to 6, **characterised in that** the selector shaft is used as the first aligning device.

9. The method according to one of the preceding claims, **characterised in that** tolerance deviations are recorded and taken into account by a computer.

10. The method according to one of Claims 1, 2, 5 to 9, **characterised in that** a ball bearing (10) is inserted into the fixing opening (4).

11. The method according to one of the preceding claims, **characterised in that** the selector gate (1) is actuated electromechanically or hydrostatically or by a gear selector.

12. The use of a slide block in a method according to Claims 1 to 11.

## Revendications

1. Procédé de fabrication d'un composant de changement de vitesse (S) d'une boîte de vitesses de véhicule avec au moins une coulisse de changement de vitesse (1) et/ou des composants de coulisse de changement de vitesse individuels à laquelle/auxquels au moins un bras de changement de vitesse (2.1, 2.2) est connecté de manière partiellement pivotante, dans lequel est formé, dans la coulisse de changement de vitesse (1) et/ou dans chaque composant de coulisse de changement de vitesse individuel, un évidement de doigt de commande (3) et est réalisée, dans le bras de changement de vitesse (2.1, 2.2), au moins une ouverture de fixation (4),
**caractérisé par** les étapes suivantes:
- la coulisse de changement de vitesse (1) et/ou chaque composant de coulisse de changement de vitesse individuel est ajusté dans une première position en introduisant un premier moyen d'ajustement dans l'évidement de doigt de commande (3) de la coulisse de changement de vitesse (1) et/ou dans chaque composant de coulisse de changement de vitesse individuel;
- l'ouverture de fixation (4) est ajustée dans une deuxième position à l'aide d'un deuxième moyen d'ajustement;
- le composant de changement de vitesse (S) est mesuré, où les écarts de tolérance sont détectés;
- dans le bras de changement de vitesse (2.1, 2.2) est réalisé, en tenant compte des écarts de tolérance détectés, au moins un alésage (6) destiné à recevoir un coulisseau (7).

2. Procédé de fabrication d'un composant de changement de vitesse (S) d'une boîte de vitesses de véhicule avec au moins une coulisse de changement de vitesse (1) et/ou des composants de coulisse de changement de vitesse individuels à laquelle/auxquels au moins un bras de changement de vitesse (2.1, 2.2) est connecté de manière partiellement pivotante, dans lequel est formé, dans la coulisse de changement de vitesse (1) et/ou dans chaque composant de coulisse de changement de vitesse individuel, un évidement de doigt de commande (3) et est réalisée, dans le bras de changement de vitesse (2.1, 2.2), au moins une ouverture de fixation (4), dans lequel est réalisé, dans le bras de changement de vitesse (2.1, 2.2), un alésage (6) destiné à recevoir un coulisseau (7),
**caractérisé par** les étapes suivantes:
- la coulisse de changement de vitesse (1) et/ou chaque composant de coulisse de changement de vitesse individuel est ajusté dans une première position en introduisant un premier moyen d'ajustement dans l'évidement de doigt de commande (3) et/ou dans chaque composant de coulisse de changement de vitesse individuel;
- l'ouverture de fixation (4) est ajustée dans une deuxième position à l'aide d'un deuxième moyen d'ajustement;
- le composant de changement de vitesse (S) est mesuré, où les écarts de tolérance sont détectés;
- dans l'alésage (6) est placé, en tenant compte des écarts de tolérance détectés, un coulisseau parmi une sélection de coulisseaux (7) qui compense substantiellement les écarts de tolérance détectés.

3. Procédé de fabrication d'un composant de changement de vitesse (S) d'une boîte de vitesses de véhicule avec au moins une coulisse de changement de vitesse (1), dans lequel la coulisse de changement de vitesse (1) présente un biais de changement de vitesse ou une face de changement de vitesse, dans lequel la coulisse de changement de vitesse (1) est disposée sur l'arbre de changement de vitesse, l'arbre de changement de vitesse étant disposé de manière à pouvoir tourner axialement et mobile linéairement,
**caractérisé par** les étapes suivantes:
- la coulisse de changement de vitesse (1) et/ou chaque composant de coulisse de changement de vitesse individuel est ajusté dans une première position en actionnant l'arbre de changement de vitesse;
- le composant du changement de vitesse (S) est mesuré, où les écarts de tolérance sont détectés;
- dans le bras de changement de vitesse (2.1, 2.2) est réalisé, en tenant compte des écarts de tolérance détectés, au moins un alésage (6) destiné à recevoir un coulisseau (7).

4. Procédé de fabrication d'un composant de changement de vitesse (S) d'une boîte de vitesses de véhicule avec au moins une coulisse de changement de vitesse (1), dans lequel la coulisse de changement de vitesse (1) présente un biais de changement de vitesse ou une face de changement de vitesse, dans lequel la coulisse de changement de vitesse (1) est disposée sur l'arbre de changement de vitesse, l'arbre de changement de vitesse étant disposé de manière à pouvoir tourner axialement et mobile linéairement, et dans lequel est réalisé, dans un bras de changement de vitesse (2.1, 2.2), au moins un alésage (6) destiné à recevoir un coulisseau (7),
**caractérisé par** les étapes suivantes:
- la coulisse de changement de vitesse (1) et/ou chaque composant de coulisse de changement de vitesse individuel est ajusté dans une première position en actionnant l'arbre de changement de vitesse;
- le composant de changement de vitesse (S) est mesuré, où les écarts de tolérance sont détectés;
- dans l'alésage (6) est placé, en tenant compte des écarts de tolérance détectés, un coulisseau parmi une sélection de coulisseaux (7) qui compense substantiellement les écarts de tolérance détectés.

5. Procédé selon l'une des revendications précédentes, **caractérisé par le fait que** les écarts de tolérance sont déterminés en comparant les données de consigne avec les données réelles du composant de changement de vitesse ou de la fourche de changement de vitesse (S).

6. Procédé selon la revendication 1 ou 3, **caractérisé par le fait que** l'alésage est réalisé à la position du bras de changement de vitesse (2.1, 2.2) prédéterminée par les données de consigne pour compenser les écarts de tolérance.

7. Procédé selon l'une des revendications 1, 2, 5, 6, **caractérisé par le fait qu'**un élément en forme de barre (4) est utilisé comme premier moyen d'ajustement.

8. Procédé selon l'une des revendications 3 à 6, **caractérisé par le fait que** l'arbre de changement de vitesse est utilisé comme premier moyen d'ajustement.

9. Procédé selon l'une des revendications précédentes, **caractérisé par le fait que** la détection et la prise en compte des écarts de tolérance sont effectuées par un ordinateur.

10. Procédé selon l'une quelconque des revendications 1, 2, 5 à 9, **caractérisé par le fait que** dans l'ouverture de fixation (4) est placé un roulement à billes (10).

11. Procédé selon l'une des revendications précédentes, **caractérisé par le fait que** la coulisse de changement de vitesse (1) est actionnée par un levier de changement de vitesse ou de manière électromécanique ou hydrostatique.

12. Utilisation d'un coulisseau dans un procédé selon les revendications 1 à 11.
